# EUROPEAN PATENT SPECIFICATION

(11) **EP 4 210 998 B1**
(45) Date of publication and mention of the grant of the patent: **24.12.2025**
(21) Application number: 21790235.2
(22) Date of filing: 14.09.2021
(51) Int. Cl.: B60N 2/235, B60N 2/02

(54) **ADJUSTMENT FITTING FOR A VEHICLE SEAT, AND VEHICLE SEAT**
VERSTELLBESCHLAG FÜR EINEN FAHRZEUGSITZ UND FAHRZEUGSITZ
FERRURE DE RÉGLAGE POUR UN SIÈGE DE VÉHICULE, ET SIÈGE DE VÉHICULE

(30) Priority: 14.09.2020 DE 102020123877
(43) Date of publication of application: 19.07.2023
(73) Proprietor: KEIPER Seating Mechanisms Co., Ltd., Shanghai 201315 (CN)
(72) Inventor: ALBERT REGINOLD, Kirubaharan, 51399 Burscheid (DE); SCHOLZ, Grit, 42897 Remscheid (DE); PARAMASIVAM, Balaji Lakshmanan, 51379 Leverkusen (DE); ROCK, Arkadius, 42719 Solingen (DE); HENKEL, Dieter, 42897 Remscheid (DE); SCHÜLER, Rolf, 42579 Heiligenhaus (DE)
(74) Representative: Kutzenberger Wolff & Partner
(86) International application number: PCT/IB2021/058352
(87) International publication number: WO 2022/054025

(56) References cited:
- WO-A1-2017/180520
- DE-A1- 102011 113 747
- DE-A1- 102019 212 517
- FR-A1- 2 956 623
- US-A1- 2013 001 997

## Description

The invention relates to a system comprising an adjustment fitting for a vehicle seat and a drive having the features of the preamble of claim 1, and to a vehicle seat.

### BACKGROUND OF THE INVENTION

DE 103 56 614 A1 discloses a seat with a seat part and with a backrest, wherein the backrest is rotatable relative to the seat part from a first position into a second position and is unlockable relative to the seat part and lockable in at least one of the positions, wherein further the seat comprises a motor and wherein by means of the motor both the unlocking of the backrest relative to the seat part and the rotation of the backrest from the first position into the second position are provided.

DE 10 2006 020 751 A1 discloses an adjustment fitting for a vehicle seat, wherein the adjustment fitting has a first fitting part and a second fitting part provided rotatably adjustable relative thereto about an axis of rotation by means of a gear, wherein the gear comprises a first set of teeth on the first fitting part and wherein the gear comprises a second set of teeth on the second fitting part arranged eccentrically relative to the first set of teeth, wherein two wedge segments are provided to ensure the eccentric arrangement of the first set of teeth relative to the second set of teeth. The wedge segments have an inner radius and an outer radius, wherein the adjustment fitting has a braking element and wherein the braking element has an extension in the radial direction, starting from the axis of rotation, approximately corresponding to the outer radius of the wedge segments.

A vehicle seat is known from DE 10 2007 017 672 A1, comprising a first seat part, a second seat part which can be adjusted relative to the first seat part, an electric motor for adjusting the two seat parts relative to one another by means of an electric motor, and a locking device for locking the seat parts relative to one another. It is provided that the locking device can be unlocked by a first partial movement of the electric motor and that the seat parts can be adjusted relative to one another by a subsequent second partial movement of the electric motor, the electric motor rotating an adjustment means mounted on the first seat part and thereby generating a relative rotation between the adjustment means and the electric motor, in the first partial movement of the electric motor, the electric motor is pivoted about the common axis of rotation, thereby unlocking the locking device, and in the second partial movement, the electric motor is stationary and the adjusting means adjusts the second seat part.

DE 10 2009 038 735 A1 discloses an adjusting device for a vehicle component, in particular for the backrest of a vehicle seat, having a first fitting part and a second fitting part which are arranged along an axis of rotation, the relative position of the two fitting parts with respect to one another being variable by means of an eccentric, which transmits a torque from a drive to the first fitting part so that the latter rolls on the second fitting part, and the eccentric comprises two eccentric means which can be driven by a driver arranged on the drive, and the eccentric comprises a spring means which acts between the two eccentric means. A brake means prevents self-adjustment of the adjustment device. The braking means cooperates with a projection on the first fitting part, the central axis of which extends parallel to the axis of rotation of the device.

WO 2012/065721 A1 discloses an adjusting device for a vehicle component, having a first fitting part and a second fitting part which are arranged along an axis of rotation, the relative position of the two fitting parts with respect to one another being variable by means of an eccentric which transmits a torque from a drive to a gearwheel, so that the latter rolls on the second fitting part and which preferably comprises two eccentric means, the adjusting device having a braking means which prevents its self-adjustment at least to a large extent, the braking means interacting with a locking contour provided on the gear wheel.

Further adjusting fittings are known e.g. from documents FR 2 956 623 A1, WO 2017/180 520 A1, US 2013/001 997 A1 or DE 10 2019 2121 517 A1.

Adjustment fittings for vehicle seats, in particular backrest adjusters, are known from the prior art. Backrest adjusters known from the prior art are developed and optimized for adjusting a backrest angle in a relatively small comfort adjustment range around a design position. An electric adjustment function, which is being used more and more frequently due to an increasingly smaller installation space between the vehicle seat and a B-pillar of the vehicles in new vehicles being developed and the resulting difficulty in accessing a handwheel for operating the backrest adjuster, is designed for adjustment by the operator by operating a corresponding electric switch. The adjustment speed must be kept low enough to enable the seat occupant to adjust the desired backrest angle with the reaction speed available to him without having to adjust the backrest angle back and forth several times.

In view of ever-increasing comfort requirements, backrests of rear seat systems are also increasingly being electrified, whereby they can be fully adjusted forwards or backwards in addition to displaying a larger load volume, preferably electrically via remote control or cell phone app and at a significantly higher speed than with pure comfort settings.

The parallel further development of autonomous driving vehicles also requires an extended adjustment range for the vehicle seat used by the driver as occupant in order to make the comfort available to the driver who is no longer constantly steering the vehicle. While at the same time maintaining occupant safety in the event of an accident, this means that the seat belt must be moved completely with the seat in order to lie close to the occupant even when the seats or backrests are positioned far back. Belt systems of this type, whose shoulder belt is therefore no longer fixed to the body at the B-pillar but in the upper area of the backrest, result in significantly higher loads in the backrest adjuster (adjustment fitting) and consequently require more installation space and more weight than prior-art backrest adjusters with the same basic mechanical principle.

The invention is based on the object of providing an adjustment fitting for high loads and a corresponding vehicle seat.

### SUMMARY OF THE INVENTION

This object is achieved according to the invention by a system comprising an adjustment fitting and a drive with the features of claim 1 and a vehicle seat with the features of claim 12.

The adjustment (or adjusting) fitting comprises at least a first fitting part, in particular connectable to a seat substructure of the vehicle seat, and a second fitting part pivotable relative to the first fitting part about an axis of rotation, in particular connectable to a backrest of the vehicle seat, and at least one latch, in particular guided radially in one of the two fitting parts, for locking the first fitting part to the second fitting part, wherein the adjustment fitting has an input disc which can be connected to a drive and a retaining disc which is connected to the input disc by frictional force, and wherein the retaining disc holds the at least one latch in an unlocked position in an activated state of the drive.

In that the adjustment fitting has the input disc which is connected to a drive and the retaining disc which is connected to the input disc by frictional force, wherein the retaining disc holds the at least one latch in the unlocked position in the activated state of the drive, the adjustment fitting is held in an unlocked position for as long as the drive adjusts the first fitting part and the second fitting part relative to one another.

In an activated state of the drive, a drive disc or a drive pulley can act in the circumferential direction on the at least one latch in such a way that the second fitting part rotates relative to the first fitting part. Alternatively, the drive disc can at least indirectly drive a sun wheel of an adjustment fitting.

According to the present invention, in an activated state of the actuator, a spring arrangement or spring assembly acting between the input disc and a control disc is preloaded. Additionally, the spring arrangement relaxes or is less preloaded in a deactivated state of the drive than in the activated state of the drive. The energy stored in the spring arrangement can be used to relock the adjustment fitting.

In a vehicle seat, the backrest and thus the adjustment fitting can be drivable in two directions of rotation. Preferably, the second fitting part is selectively drivable in two opposite directions of rotation relative to the first fitting part. A number of control cams, a number of retaining cams and a number of drive cams are each being at least, in particular exactly, twice as great as a number of latches. In particular, a portion or a part of the control cams, the retaining cams and the drive cams are being operative in a first direction of rotation and another portion or part of the control cams, the retaining cams and the drive cams are being operative in a second direction of rotation.

### BRIEF DESCRIPTION OF THE DRAWINGS

Before the following embodiments of the invention are described in more detail on the basis of figures, it should first be noted that the invention is not limited to the components described or the process steps described. Furthermore, the terminology used does not represent a limitation, but is merely exemplary in character. Where the singular is used in the description and the claims, the plural is included unless the context explicitly excludes this.

In the following, the invention is explained in more detail with reference to examples of embodiments shown in the figures. However, the invention is not limited to these embodiments. They show:
- Fig. 1:: a schematic view of an adjustment fitting according to a first embodiment in a locked state and a first angular position of a first fitting part relative to a second fitting part,
- Fig. 2:: a detailed view of Fig. 1,
- Fig. 3:: a schematic view of the adjustment fitting of Fig. 2 during an actuation of the adjustment fitting, wherein a retaining bolt is about to contact a latch cam of a latch,
- Fig. 4:: a schematic view of the adjustment fitting of Fig. 2 during actuation of the adjustment fitting, wherein the retaining bolt is in contact with the latch cam,
- Fig. 5:: a schematic view of the adjustment fitting from Fig. 2 during an actuation of the adjustment fitting, whereby the latch is moved radially inwards so that the adjustment fitting is transferred to an unlocked state,
- Fig. 6:: a detailed view of Fig. 5,
- Fig. 6A:: a detailed view similar to Fig. 6 on a cam of a latch of an adjustment fitting according to a variation of the first embodiment,
- Fig. 7:: a schematic view of the adjustment fitting of Fig. 2 in the unlocked state and a second angular position of the first fitting part relative to the second fitting part,
- Fig. 8:: a schematic view of the adjustment fitting of Fig. 2 in the locked state and in the second angular position of the first fitting part relative to the second fitting part,
- Fig. 9:: a perspective, transparent view of a part of an adjustment fitting according to the invention according to a second embodiment, and
- Fig. 10:: an exploded view of parts of the adjustment fitting shown in Fig. 9, with only one gear and one latch shown.

### DETAILED DESCRIPTION OF THE PREFFERED EMBODIMENTS

A vehicle seat for a motor vehicle according to the invention, which is not shown the figures, has a seat part and a backrest whose inclination can be adjusted relative to the seat part. The backrest is connected to the seat part in an inclination-adjustable manner by means of at least one system comprising an adjustment fitting 100, 200 and a drive 141 according to the invention.

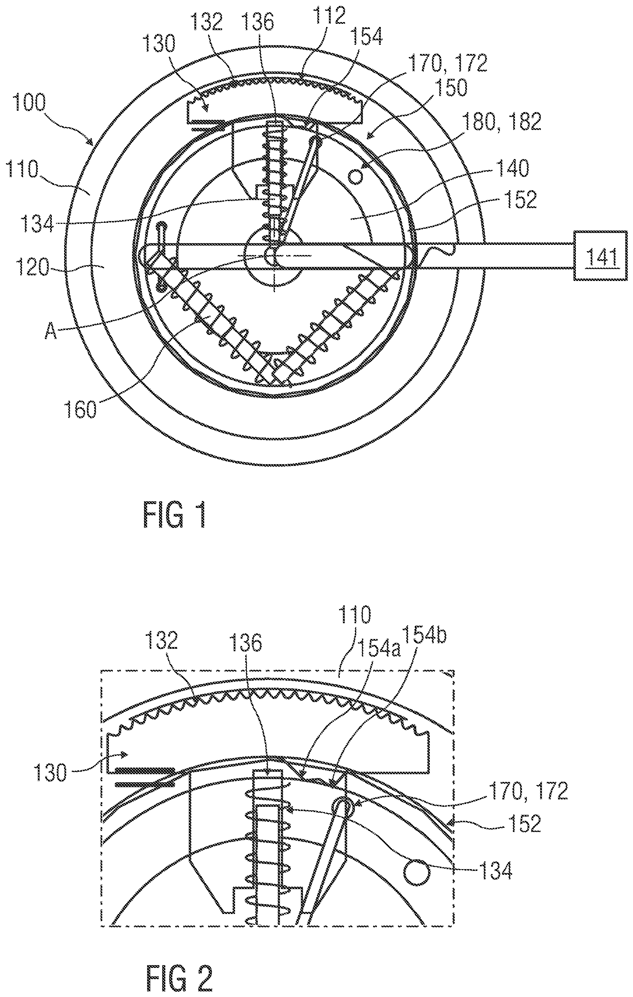

Figures 1 to 8 show an adjustment fitting 100 according to a first embodiment. The adjustment fitting 100 has a first fitting part 110 and a second fitting part 120, which can be rotated relative to one another about an axis of rotation A. The adjustment fitting 100 further comprises a detent lock by means of a plurality of latches 130, similar to a detent fitting described in DE 10 2006 015 560 B3. The directional indications "radial", "axial" and "circumference" or "circumferential direction" used below refer to the axis of rotation A, unless otherwise described below.

The two fitting parts 110, 120 can each be approximately inscribed in a circular disc shape. Both fitting parts 110, 120 are preferably made of metal, in particular steel, which can be hardened at least in certain areas. For absorbing axially acting forces, i.e. for axial cohesion of the fitting parts 110, 120, a embracing ring not shown in the figures may be provided. The embracing ring can have a substantially flat ring shape, but in an alternative embodiment can be L-shaped profiled with a cylindrical section and a flat ring section on an end face.

For example, the first fitting part 110 is fixedly connectable to a structure of a backrest of a vehicle seat. The second fitting part 120 can then be firmly connected to a structure of a seat part of the vehicle seat. However, the assignments of the fitting parts 110, 120 can also be interchanged, i.e. the first fitting part 110 is alternatively attachable to the seat part and the second fitting part 12 is alternatively attachable to the backrest. Alternatively, one of the two fitting parts 110, 120 can be connected to a further fitting or a planetary gear or integrated into a further adjustment fitting, in particular for driving a planetary gear. The adjustment fitting 100 mounted in the vehicle seat is in the power flow between the backrest and the seat part of the vehicle seat, and must be of a correspondingly strong and rigid design.

The second fitting part 120 has a plurality of guide segments, each of which guides a latch 130 in the radial direction in pairs with straight guide surfaces. The latches 130 and thus the guide segments are evenly distributed around the circumference. In the figures, only one of the latches 130 is shown as an example. The latches 130 are arranged in an installation space defined between the two fitting parts 110, 120. The latches 130 each have toothing 132 at their radially outer ends, which can be brought into toothed engagement with a toothed rim 112 of the first fitting part 110, which is designed as a ring gear. When the toothed rim 112 and the latches 130 are in toothed engagement, the adjustment fitting 100 is locked and can absorb large torques about the axis of rotation A. The latches 130 are preloaded in the direction of the toothed rim 112 by means of springs, in this case compression springs 134.

For unlocking the adjustment fitting 100 and driving the second fitting part 120 relative to the first fitting part 110 about the axis of rotation A, the adjustment fitting 100 further comprises an input disc 140, a control disc 150, a spring assembly 160 acting circumferentially between the input disc 140 and the control disc 150, a retaining disc 170, and a drive disc 180.

The input disc 140, the control disc 150, the spring assembly 160, the retaining disc 170 and the drive disc 180 are preferably each arranged at least largely within the installation space defined between the two fitting parts 110, 120. The input disc 140, the control disc 150, the retaining disc 170 and the drive disc 180 form a group of discs arranged axially adjacent to one another, which are all arranged concentrically to the axis of rotation A, and which can be coupled to one another at the respective required time by means of springs, driving bolts and contours only partially shown in the figures. The respective coupling elements (bolts, contours, etc.) are preferably present several times symmetrically about the axis of rotation A, in particular as a function of the number of latches 130.

The input disc 140 is non-rotatably connected to a drive 141, in particular an electric motor, preferably a geared motor.

In the present case, the control disc 150 is largely circular disc-shaped and has radially outwardly a ring area 152. The control disc 150 also has a plurality of control cams 154. The number of control cams 154 corresponds to the number of latches 130. Each of the control cams 154 projects radially inwardly from a circular cylindrical radially outer surface of the ring area 152. Each of the control cams 154 has a retaining contour 154b extending substantially in a circumferential direction, and a ramp contour 154a connecting a radially inner surface of the ring area 152 to the retaining contour 154b. An end portion of the control cam 154 remote from the ramp contour 154a may rise radially outward.

The control disc 150 is rotatably mounted in the installation space, preferably mounted on the first fitting part 110 and/or on the second fitting part 120. The control disc 150 is circumferentially coupled to the input disc 140 by means of the spring assembly 160. A relative rotation between the input disc 140 and the control disc 150 tensions or relaxes the spring assembly 160. In a tensioned state of the spring assembly 160, the spring assembly 160 stores energy provided by elastic deformation, in particular by the drive 141. This energy can rotate the input disc 140 and the control disc 150 relative to each other in a manner described in more detail below, while simultaneously relaxing the spring assembly 160. The amount of this energy can be constructively adjusted in various ways, ultimately by defining a relative rotating angle between the input disc 140 and the control disc 150, as well as by an effective spring rate of the spring assembly 160, wherein the rotating angle or the associated torque equilibrium can also be defined, for example, by the geometry of the control cams 154 connected to the control disc 150, in particular their idle travel, local pitch, travel/angle progression etc., can be defined. In addition, friction ratios between the input disc 140 and the control disc 150 in particular can be set as a function of the relative rotating angle in such a way that the motion sequence between the input disc 140 and the control disc 150 described in more detail below is possible.

The retaining disc 170 is rotatably mounted in the installation space, preferably mounted on the first fitting part 110 and/or on the second fitting part 120. The retaining disc 170 is frictionally coupled to the input disc 140. A torque that can be transmitted between the input disc 140 and the retaining disc 170 can be defined in a wide variety of ways known per se, in particular by means of an axial preload force, the frictional pairing of the contact surfaces, etc.

The retaining disc 170 also has a plurality of axially projecting retaining cams 172, which can be designed in particular as through-positions or as pins or studs firmly connected to the retaining disc 170. The number of retaining cams 172 corresponds to the number of latches 130. The retaining cams 172 are arranged in a radially outer region of the retaining disc 170 evenly distributed over the circumference. By means of the retaining cams 172, the latches 130 can be frictionally held in an unlocked position. For this purpose, the retaining cams 172 can bear against axially projecting latch cams 136 of the latches 130 under pretension and in a manner described in more detail below.

The drive disc 180 is rotatably mounted in the installation space, preferably mounted on the first fitting part 110 and/or on the second fitting part 120. The drive disc 180 is frictionally coupled to the retaining disc 170. A torque that can be transmitted between the drive disc 180 and the retaining disc 170 can be defined in a wide variety of ways known per se, in particular by means of an axial preload force, the frictional pairing of the contact surfaces, etc.

The drive disc 180 also has a plurality of axially projecting drive cams 182, which can be designed in particular as through-positions or as pins or studs that are fixedly connected to the drive disc 180. The number of drive cams 182 corresponds at most to the number of latches 130. The drive cams 182 are arranged in a radially outer region of the drive disc 180 evenly distributed over the circumference. By means of the drive cams 182, a force can be applied to the latches 130 in the circumferential direction such that the latches 130, via the guide segments in the second fitting part 120, rotate the second fitting part 120 relative to the first fitting part 110.

At the beginning of an adjustment process of the adjustment fitting 100, the toothing 132 of the latches 130 must first be disengaged from the toothed rim 112 of the first fitting part 110 before a relative rotation between the fitting parts 110, 120 can take place. For this purpose, the latches 130 are moved radially inwards. The unlocked state of the latches 130 must be maintained for the entire duration of the relative rotation between the fitting parts 110, 120. After completion of the relative rotation (by switching off the drive), the latches 130 must be returned to the state locking with the toothed rim 112 in order to be able to absorb use loads or crash loads. The necessary movements of the latches 130 radially outward for this purpose require mechanical energy. However, since locking must take place when or immediately after the drive is switched off, i.e. in a state in which no further energy is introduced into the adjustment fitting 100, the energy required for locking (displacement of the latches 130 radially outwards) must be stored in the adjustment fitting 100 beforehand. This function is performed by the spring assembly 160, which is connected on the one hand to the input disc 140 and on the other hand to the control disc 150.

The adjustment procedure of the adjustment fitting 100 is explained below with reference to schematic figures 1 to 8, in which the adjustment fitting 100 is shown in a highly simplified and abstracted form for better understanding. The sequence of the figures corresponds to the sequence of unlocking, setting and relocking of the adjustment fitting 100. Only exactly one latch 130 is shown with the associated control cam 154, the associated retaining cam 172 and the associated drive cam 182. The operation of the adjustment fitting 100 is described with reference to the one latch 130 shown. The other latches 130 are operated in a similar manner.

Figures 1 and 2 show the adjustment fitting 100 in a locked initial position in which the toothing 132 of the latch 130 guided in the second fitting part 120 are in meshing engagement with the toothed rim 112 of the first fitting part 110. The control cam 150, the retaining cam 170, and the drive cam 182 are in a relative angular position to each other and to the second fitting part 120 such that the control cam 154, the retaining cam 172, and the drive cam 182 are all located on the same side, in Figures 1 and 2 on the right side, of the latch cam 136 when viewed in the circumferential direction.

In order for the first fitting part 110, which is presently connected to the backrest of the vehicle seat, to be pivotable about the axis of rotation A relative to the second fitting part 120, which is presently connected to the seat part of the vehicle seat, and thereby an angle of inclination of the backrest relative to the seat part can be changed, the adjustment fitting 100 must first be unlocked.

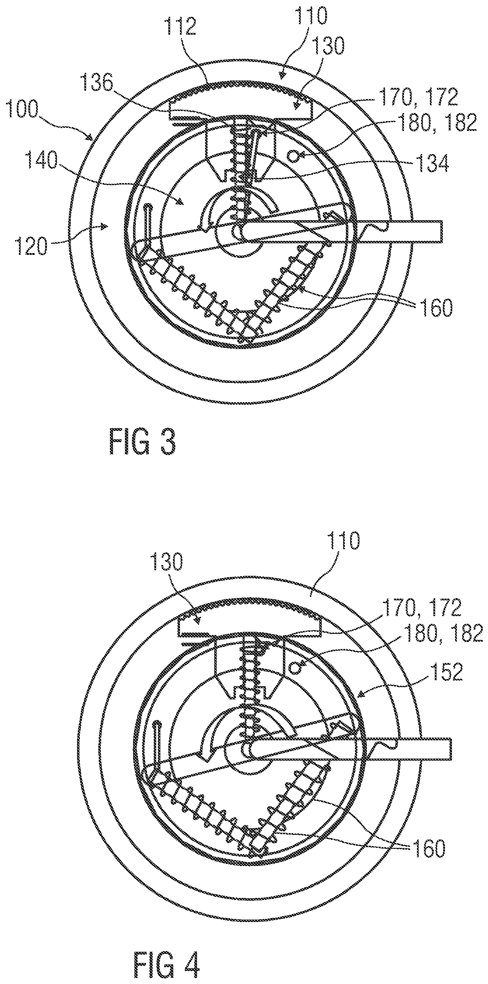

Fig. 3 shows a state of the adjustment fitting 100 in which the actuator has already rotated the input disc 140 (counterclockwise in Fig. 3) by approximately 15 degrees. As a result of this rotation of the input disc 140, the spring assembly 160 is already tensioned and thus drive energy is stored between the input disc 140 and the control disc 150. The drive energy can be used in a later process step. The amount of this drive energy can be defined in a wide variety of ways, in particular by defining the relative angle of rotation between the input disc 140 and the control disc 150, as well as by the effective spring rate of the spring assembly 160. The angle of rotation or the associated torque equilibrium can be defined, for example, by the geometry of the control cam 154 connected to the control disc 150, its idle travel, local slope of the ramp contour 154a, travel/angle progression, etc.

By comparing Figure 3 to Figure 1, it can be seen that the retaining cam 172 of the retaining disc 170 has already moved through the same angle as the input disc 140 and is about to contact with the latch cam 136 of the latch 130. This synchronous movement between the input disc 140 and the retaining disc 170 in the first step occurs by the previously described frictional coupling in the manner of a friction coupling between the input disc 140 and the retaining disc 170. A transmittable torque between the input disc 140 and the retaining disc 170 can be defined by means of a preload force, a frictional pairing of contact surfaces, etc.

Figure 4 shows a state of the adjustment fitting 100 in which the retaining cam 172 is already in contact with the latch cam 136. This state, which further determines a minimum contact force between the retaining cam 172 and the latch cam 136, can be defined independently of an external load on the adjustment fitting 100. This serves to maintain the latch 130 in an unlocked, radially more inward position, even if the external loads become too small to maintain the latch 130 unlocked position.

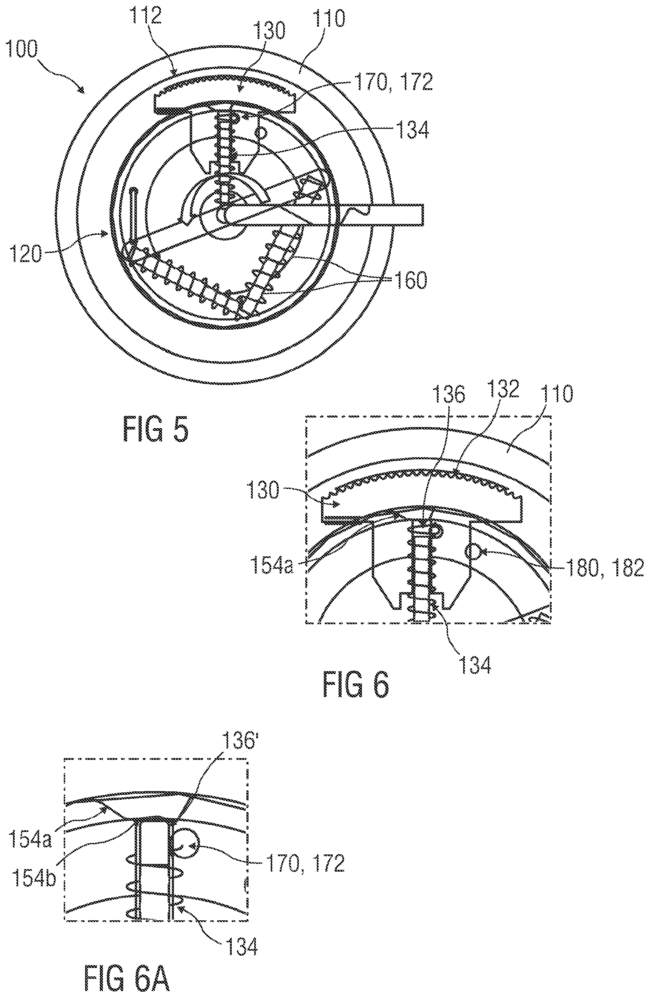

In the further course, the ramp contour 154a of the control cam 154 of the control disc 150 runs up against the latch cam 136 and subsequently displaces the latch cam 136 radially inward. Subsequently, the retaining contour 154b of the control cam 154 reaches the latch cam 136 and thereby holds the latch 130 in the unlocked position. This condition is shown in Figure 5.

Figure 6 shows a detailed view from Figure 5. Figure 6A shows a detailed view similar to Figure 6, in particular on a latch cam 136' of a setting fitting according to a variation of the first embodiment, in which the latch cam 136' is designed differently from the previously described latch cam 136 in that a contact geometry between the retaining cam 172 and the latch cam 136' is designed in such a way that the latch 130 can be held in the unlocked (radially inner) position not exclusively by frictional force, but also by positive engagement or positive locking or form-fit engagement.

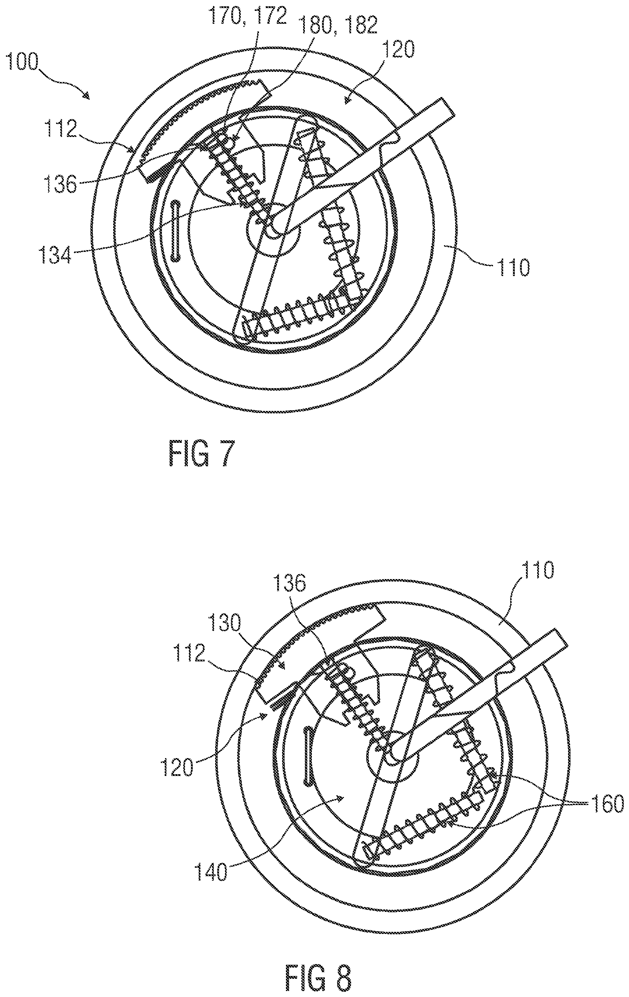

By observing and comparing Figures 6 and 7, it becomes clear that the control disc 150 is initially prevented by suitable means from continuing to rotate together with the input disc 140 relative to the second fitting part 120 in the further course, whereby the drive disc 180 continues to rotate with the input disc 140 until the drive cam 182, by bearing against the latch cams 136, drives the latch 130 and with it the second fitting part 120 in a pivoting manner about the axis of rotation A. The latch 130 continues to be held in the unlocked (radially inward) position because a spring force of the compression spring 134 acting outwardly in the radial direction and the radially inwardly directed friction component of a radial force from a tangential force of the frictional connection between the input disc 140 and retaining disc 170 oppose each other, so that, with suitably high torque of the frictional connection between the input disc 140 and the retaining disc 170, the latch 130 can be held securely in its unlocked position.

Figure 8 shows the adjustment fitting 100 after the angular position of the second fitting part 120 has been adjusted and locked again.

After the backrest tilt angle to be adjusted is reached and the drive is switched off, in particular by a user of the vehicle seat releasing a control element for driving the electric adjustment of the tilt angle, the drive torque of the drive abruptly decreases to almost zero, whereby both the drive force of the input disc 140 and the torque of the retaining disc 170 become zero. In the case of a drive by means of a self-locking gear motor, the input disc 140 cannot be turned back, so that now the preloaded spring assembly 160 continues to turn the remaining discs of the adjustment fitting 100 in the same direction (counterclockwise in the figures).

The latch 130 is now acted upon exclusively by the pretensioning force of the compression spring 134 and, at right angles or perpendicular thereto, by a frictional force resulting from the friction between the control cam 154 and the latch cam 136, which is overcome by the pretensioning force of the compression spring 134 if the latter is appropriately designed. The control disc 150 continues to rotate due to the energy stored in the spring assembly 160, so that the latch 130 is released from the control cam 154 and the latch 130 is pushed radially outward to its locked position. Figure 8 shows this locked state.

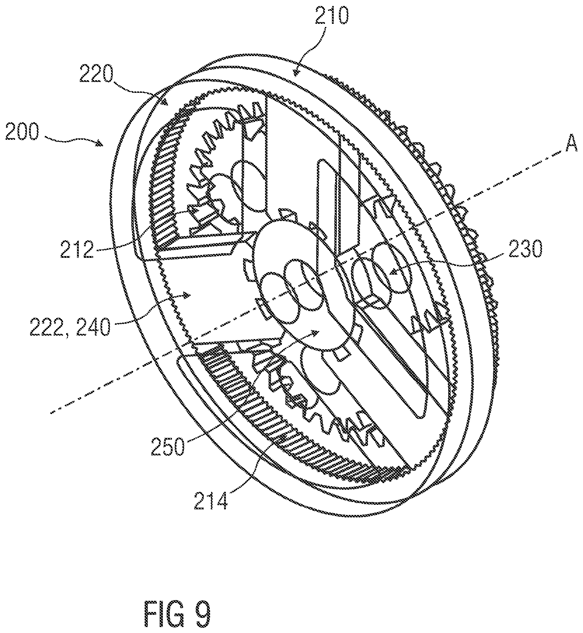

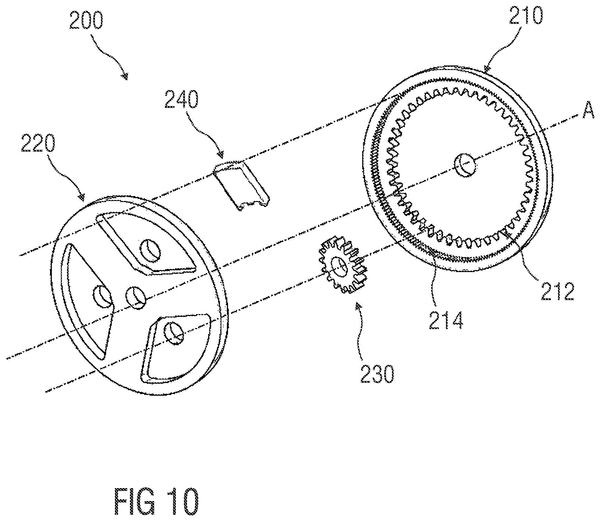

Figures 9 and 10 show partial circumferences of an adjustment fitting 200 according to a second embodiment. The adjustment fitting 200 includes a first fitting part 210, a second fitting part 220, and three gear wheels 230. The first fitting part 210 acts as a ring gear of a planetary gear and also includes internal teeth 214 of a detent latch. The second fitting member 220 acts as both a web of the planetary gear and a guide member of the detent latch. The adjustment fitting 200 comprises an eccentric 250.

The first fitting part 210 has a first internal toothing 212, which forms the first internal toothing of the ring gear of the planetary gear. The three gear wheels 230 act as planets of the planetary gear and are each rotatably mounted on one of a total of three bearing pins, not shown in Figures 9 and 10, of the second fitting member 220, which acts as a web, and are in mesh with the first internal toothing 212. For a better overview, Figure 10 shows only one of the three gear wheels 230 and one of the latches 240.

The bearing pins of the web are arranged at 120 degrees to each other around a central axis of rotation A. The sun gear is not shown in Figures 9 and 10. A sun gear rotatably mounted about the axis of rotation A is not shown in Figures 9 and 10.

The sun wheel or eccentric 250 is driven by an adjustment fitting not shown in Figures 9 and 10, which corresponds to the adjustment fitting 100 of the first embodiment, wherein the second fitting part 120 of this adjustment fitting 100 is fixedly connected to the sun wheel or eccentric 250 of the adjustment fitting 200.

The first fitting part 210 can be firmly connected to a seat substructure of a vehicle seat. The second fitting part 220 can be firmly connected to the backrest of the vehicle seat, so that the (output) web of the planetary gear unit can be firmly connected to the backrest.

The second fitting part 220 is also formed as a guide component of the latching latch. For this purpose, the second fitting part 220 has three guide channels 222 for one of three latches 240 each. The latches 240 are each movably guided in the radial direction in an associated guide channel 222, relative to the axis of rotation A. The latches 240 each carry, radially outwardly, a set of teeth 242 that can be brought into meshing engagement with the second set of internal teeth 214 of the first fitting part 210. When the latches 240 guided in the second fitting part 220 are in toothed engagement with the second internal teeth 214 of the first fitting part 210, the first fitting part 210 and the second fitting part 220 are interlocked with each other in such a way that no relative rotation about the axis of rotation A can take place.

The features disclosed in the foregoing description, the claims and the figures may be of significance both individually and in combination for the realization of the invention in its various embodiments, provided that they remain within the scope of protection of the claims.

Although the invention has been described in detail in the figures and the preceding embodiment, the representations are illustrative and exemplary and are not to be construed as limiting. In particular, the choice of the proportions of the individual elements shown in the drawings is not to be construed as necessary or limiting. Furthermore, the invention is in particular not limited to the explained embodiments. Further variants of the invention and their embodiment will be apparent to those skilled in the art from the preceding disclosure, while remaining within the scope of the claims.

Terms used in the claims such as "comprising," "having," "including," "containing," and the like do not exclude other elements or steps. The use of the indefinite article does not exclude a plurality. A single device may perform the functions of multiple units or devices recited in the claims.

### Reference list

- 100: Adjustment fitting
- 110: First fitting part
- 112: Toothed rim
- 120: Second fitting part
- 130: Latch
- 132: Toothing
- 134: Compression spring
- 136: Latch cam
- 136': Latch cam
- 140: Input disc
- 141: Drive
- 150: Control disc
- 152: Ring area
- 154: Control cam
- 154a: Ramp contour
- 154b: Retaining contour
- 160: Spring assembly
- 170: Retaining disc
- 172: Retaining cam
- 180: Drive disc
- 182: Drive cam
- 200: Adjustment fitting
- 210: First fitting part
- 212: First internal toothing
- 214: Internal teeth
- 220: Second fitting part
- 222: Guide channel
- 230: Gear wheel
- 240: Latch
- 250: Eccentric
- A: Axis of rotation

## Claims

1. System comprising an adjusting fitting (100) for a vehicle seat and a drive (141), the adjusting fitting (100) having a first fitting part (110) and a second fitting part (120) pivotable relative to the first fitting part (110) about an axis of rotation (A) and at least one latch (130), in particular guided radially in one of the two fitting parts (110, 120), for locking the first fitting part (110) to the second fitting part (120), wherein the adjustment fitting (100) has an input disc (140) which is connected to the drive (141) and a retaining disc (170) which is connected to the input disc (140) by frictional force, wherein the retaining disc (170) holds the at least one latch (130) in an unlocked position in an activated state of the drive (141), **characterized in that**, in an activated state of the drive (141), a spring assembly (160) acting between the input disc (140) and a control disc (150) is preloaded.

2. System according to claim 1, wherein, in the activated state of the drive (141), a drive disc (180) acts in the circumferential direction on the at least one latch (130) in such a way that the second fitting part (120) rotates relative to the first fitting part (110).

3. System according to any one of the preceding claims, wherein the spring assembly (160) is less preloaded in a deactivated state of the drive (141) than in an activated state of the drive (141).

4. System according to any one of the preceding claims, wherein the second fitting part (120) is selectively drivable in two opposite directions of rotation relative to the first fitting part (110).

5. System according to any one of the preceding claims, wherein a number of control cams (154), a number of retaining cams (172) and a number of drive cams (182) are each at least twice as large as a number of latches (130).

6. System according to claim 5, wherein a part of the control cams (154), retaining cams (172) and drive cams (182) are effective in a first direction of rotation and another part of the control cams (154), retaining cams (172) and drive cams (182) are effective in a second direction of rotation.

7. System according to any one of the preceding claims, **characterized in that** when the adjustment fitting (100) is adjusted by a relative rotation between the input disc (140) and the control disc (150), the spring assembly (160) is tensionable such that the spring assembly (160) stores drive energy between the input disc (140) and the control disc (150).

8. System according to claim 7, **characterized in that**, in order to take a position of the adjusting fitting (100), the control disc (150) can be rotated further on account of the energy stored in the spring arrangement (160) in such a way that the latch (130) can be released by a control cam (154) and the latch (130) can be pushed into a locking position.

9. System according to any one of the preceding claims, wherein the retaining disc (170) has a plurality of axially projecting retaining cams (172), the retaining cams (172) being arranged in a radially outer region of the retaining disc (170) uniformly distributed over a circumference.

10. System according to any one of claims 2 to 9, wherein the drive disc (180) has a plurality of axially projecting drive cams (182), the drive cams (182) being arranged in a radially outer region of the drive disc (180) uniformly distributed over a circumference.

11. System according to any one of the preceding claims, wherein the control disc (150) has a plurality of control cams (154), each of the control cams (154) having a retaining contour (154b) extending substantially in the circumferential direction and a ramp contour (154a) connecting a radially inner surface of a ring area (152) of the control disc (150) with the retaining contour (154b).

12. Vehicle seat with a system comprising an adjustment fitting (100) and a drive (141) according to any one of the preceding claims.

## Patentansprüche

1. System mit einem Verstellbeschlag (100) für einen Fahrzeugsitz und einem Antrieb (141), wobei der Verstellbeschlag (100) ein erstes Beschlagteil (110) und ein zweites Beschlagteil (120), das relativ zum ersten Beschlagteil (110) um eine Drehachse (A) schwenkbar ist, und mindestens einen Sperrriegel (130) aufweist, der insbesondere radial in einem der beiden Beschlagteile (110, 120) geführt ist, um das erste Beschlagteil (110) an dem zweiten Beschlagteil (120) zu verriegeln, wobei der Verstellbeschlag (100) eine mit dem Antrieb (141) verbundene Eingangsscheibe (140) und eine Haltescheibe (170) aufweist, die mit der Eingangsscheibe (140) durch Reibkraft verbunden ist, wobei die Haltescheibe (170) den mindestens einen Sperrriegel (130) in einem aktivierten Zustand des Antriebs (141) in einer entriegelten Position hält, **dadurch gekennzeichnet, dass** in einem aktivierten Zustand des Antriebs (141) eine zwischen der Eingangsscheibe (140) und einer Steuerscheibe (150) wirkende Federanordnung (160) vorgespannt ist.

2. System nach Anspruch 1, wobei im aktivierten Zustand des Antriebs (141) eine Antriebsscheibe (180) in Umfangsrichtung auf den mindestens einen Sperrriegel (130) derart einwirkt, dass sich das zweite Beschlagteil (120) relativ zum ersten Beschlagteil (110) dreht.

3. System nach einem der vorstehenden Ansprüche, wobei die Federanordnung (160) in einem deaktivierten Zustand des Antriebs (141) weniger vorgespannt ist als in einem aktivierten Zustand des Antriebs (141).

4. System nach einem der vorstehenden Ansprüche, wobei das zweite Beschlagteil (120) relativ zum ersten Beschlagteil (110) selektiv in zwei entgegengesetzte Drehrichtungen antreibbar ist.

5. System nach einem der vorstehenden Ansprüche, wobei eine Anzahl von Steuernocken (154), eine Anzahl von Haltenocken (172) und eine Anzahl von Antriebsnocken (182) jeweils mindestens doppelt so groß sind wie eine Anzahl von Sperrriegeln (130).

6. System nach Anspruch 5, wobei ein Teil der Steuernocken (154), Haltenocken (172) und Antriebsnocken (182) in einer ersten Drehrichtung wirksam ist und ein anderer Teil der Steuernocken (154), Haltenocken (172) und Antriebsnocken (182) in einer zweiten Drehrichtung wirksam ist.

7. System gemäß einem der vorstehenden Ansprüche, **dadurch gekennzeichnet, dass**, wenn der Verstellbeschlag (100) durch eine relative Drehung zwischen der Eingangsscheibe (140) und der Steuerscheibe (150) eingestellt wird, die Federanordnung (160) derart spannbar ist, dass die Federanordnung (160) Antriebsenergie zwischen der Eingangsscheibe (140) und der Steuerscheibe (150) speichert.

8. System nach Anspruch 7, **dadurch gekennzeichnet, dass**, um eine Position des Verstellbeschlags (100) einzunehmen, die Steuerscheibe (150) aufgrund der in der Federanordnung (160) gespeicherten Energie weitergedreht werden kann, so dass der Sperrriegel (130) durch einen Steuernocken (154) gelöst und der Sperrriegel (130) in eine Verriegelungsposition gedrückt werden kann.

9. System gemäß einem der vorstehenden Ansprüche, wobei die Haltescheibe (170) eine Vielzahl von axial vorstehenden Haltenocken (172) aufweist, wobei die Haltenocken (172) in einem radial äußeren Bereich der Haltescheibe (170) gleichmäßig über einen Umfang verteilt angeordnet sind.

10. System nach einem der Ansprüche 2 bis 9, wobei die Antriebsscheibe (180) mehrere axial vorstehende Antriebsnocken (182) aufweist, wobei die Antriebsnocken (182) in einem radial äußeren Bereich der Antriebsscheibe (180) gleichmäßig über einen Umfang verteilt angeordnet sind.

11. System nach einem der vorstehenden Ansprüche, wobei die Steuerscheibe (150) mehrere Steuernocken (154) aufweist, wobei jede der Steuernocken (154) eine sich im Wesentlichen in Umfangsrichtung erstreckende Haltekontur (154b) und eine radial innere Fläche eines Ringbereichs (152) der Steuerscheibe (150) mit der Haltekontur (154b) verbindende Rampenkontur (154a) aufweist.

12. Fahrzeugsitz mit einem System, das einen Verstellbeschlag (100) und einen Antrieb (141) gemäß einem der vorstehenden Ansprüche umfasst.

## Revendications

1. Système comprenant une ferrure de réglage (100) pour un siège de véhicule et un entraînement (141), la ferrure de réglage (100) comportant une première partie de ferrure (110) et une deuxième partie de ferrure (120) pivotante par rapport à la première partie de ferrure (110) autour d'un axe de rotation (A) et au moins un verrou (130), en particulier guidé radialement dans l'une des deux parties de ferrure (110, 120), pour verrouiller la première partie de ferrure (110) à la deuxième partie de ferrure (120), la ferrure de réglage (100) présentant un disque d'entrée (140) qui est relié à l'entraînement (141) et un disque de retenue (170) qui est relié au disque d'entrée (140) par force de friction, le disque de retenue (170) maintenant le au moins un verrou (130) dans une position déverrouillée dans un état activé de l'entraînement (141), **caractérisé en ce que**, dans un état activé de l'entraînement (141), un ensemble de ressort (160) agissant entre le disque d'entrée (140) et un disque de commande (150) est préchargé.

2. Système selon la revendication 1, dans lequel, dans l'état activé de l'entraînement (141), un disque d'entraînement (180) agit dans la direction circonférentielle sur le au moins un verrou (130) de telle sorte que la deuxième partie de ferrure (120) tourne par rapport à la première partie de ferrure (110).

3. Système selon l'une quelconque des revendications précédentes, dans lequel l'ensemble de ressort (160) est moins préchargé dans un état désactivé de l'entraînement (141) que dans un état activé de l'entraînement (141).

4. Système selon l'une quelconque des revendications précédentes, dans lequel la deuxième partie de ferrure (120) est entraînable sélectivement dans deux sens de rotation opposés par rapport à la première partie de ferrure (110).

5. Système selon l'une quelconque des revendications précédentes, dans lequel un nombre de cames de commande (154), un nombre de cames de retenue (172) et un nombre de cames d'entraînement (182) sont chacun au moins deux fois plus grands qu'un nombre de verrous (130).

6. Système selon la revendication 5, dans lequel une partie des cames de commande (154), des cames de retenue (172) et des cames d'entraînement (182) sont efficaces dans un premier sens de rotation et une autre partie des cames de commande (154), des cames de retenue (172) et des cames d'entraînement (182) sont efficaces dans une deuxième sens de rotation.

7. Système selon l'une quelconque des revendications précédentes, **caractérisé en ce que** lorsque la ferrure de réglage (100) est ajustée par une rotation relative entre le disque d'entrée (140) et le disque de commande (150), l'ensemble de ressort (160) est apte à être mis sous tension de sorte que l'ensemble de ressort (160) stocke de l'énergie d'entraînement entre le disque d'entrée (140) et le disque de commande (150).

8. Système selon la revendication 7, **caractérisé en ce que**, afin de prendre une position de la ferrure de réglage (100), le disque de commande (150) peut être tourné davantage en raison de l'énergie stockée dans l'ensemble de ressort (160) de telle sorte que le verrou (130) peut être libéré par une came de commande (154) et que le verrou (130) peut être poussé dans une position de verrouillage.

9. Système selon l'une quelconque des revendications précédentes, dans lequel le disque de retenue (170) présente une pluralité de cames de retenue (172) faisant saillie axialement, les cames de retenue (172) étant disposées dans une région radialement extérieure du disque de retenue (170) réparties uniformément sur une circonférence.

10. Système selon l'une quelconque des revendications 2 à 9, dans lequel le disque d'entraînement (180) présente une pluralité de cames d'entraînement (182) faisant saillie axialement, les cames d'entraînement (182) étant disposées dans une région radialement extérieure du disque d'entraînement (180) réparties uniformément sur une circonférence.

11. Système selon l'une quelconque des revendications précédentes, dans lequel le disque de commande (150) présente une pluralité de cames de commande (154), chacune des cames de commande (154) présentant un contour de retenue (154b) s'étendant sensiblement dans la direction circonférentielle et un contour de rampe (154a) reliant une surface radialement intérieure d'une zone annulaire (152) du disque de commande (150) au contour de retenue (154b).

12. Siège de véhicule avec un système comprenant une ferrure de réglage (100) et un entraînement (141) selon l'une quelconque des revendications précédentes.
